# EUROPEAN PATENT APPLICATION

(11) **EP 4 120 393 A1**
(43) Date of publication of application: **18.01.2023**
(21) Application number: 20924188.4
(22) Date of filing: 11.03.2020
(51) Int. Cl.: H01M 4/36, H01M 4/38, H01M 10/0525

(54) **ANODE PLATE AND MANUFACTURING METHOD THEREFOR, BATTERY USING ANODE PLATE, AND ELECTRONIC APPARATUS**

(71) Applicant: Ningde Amperex Technology Limited, Ningde, Fujian 352100 (CN)
(72) Inventor: CHEN, Maohua, Ningde, Fujian 352100 (CN); XIE, Yuansen, Ningde, Fujian 352100 (CN); DU, Peng, Ningde, Fujian 352100 (CN)
(74) Representative: Klunker IP Patentanwälte PartG mbB
(86) International application number: PCT/CN2020/078856
(87) International publication number: WO 2021/179219

(57) **Abstract**

A negative electrode plate, a method for preparing same, a battery containing same, and an electronic device are disclosed. The negative electrode plate includes a current collector and an active layer. The active layer includes a porous carbon framework and includes silicon nanoparticles and lithium metal that are located in the porous carbon framework. Embodiments of this application reduce the volume change of the negative electrode plate during cycles, suppress growth of lithium dendrites, improve safety of the lithium-ion battery, and achieve a higher energy density of the battery that contains the negative electrode plate.

## Description

### TECHNICAL FIELD

This application relates to the battery field, and in particular, to a negative electrode plate, a method for preparing same, a battery containing same, and an electronic device.

### BACKGROUND

Lithium-ion batteries are widely used in the field of consumer electronics by virtue of characteristics such as a high specific energy, a high working voltage, a low self-discharge rate, a small size, and a light weight. With rapid development of electric vehicles and portable electronic devices, people are requiring higher performance indicators of a lithium-ion battery such as a higher energy density and higher safety and cycle performance.

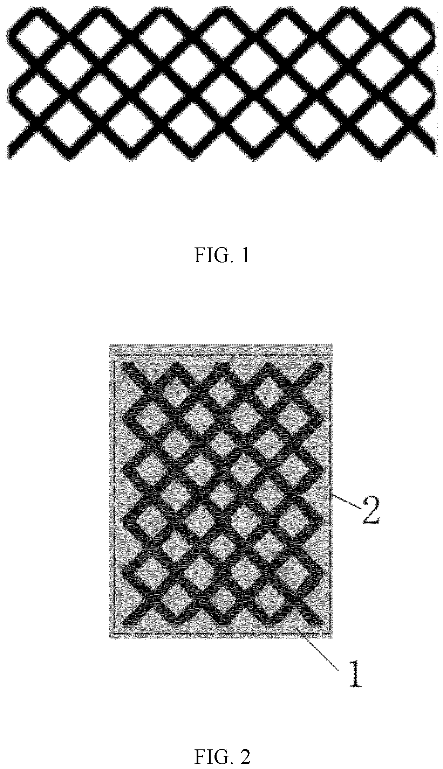

To improve the performance of the lithium-ion battery, as shown in FIG. 1, a negative electrode framework technology is employed in the prior art, by which a porous carbon framework is constructed of a carbon material on a negative electrode plate. In this way, during discharging of the battery, lithium metal ions are deintercalated from the negative electrode and intercalated into a positive electrode material without changing the shape of the carbon framework, and therefore, without reducing the volume of the negative electrode plate. During charging of the battery, the lithium metal ions are deintercalated from a positive electrode and deposited onto the negative electrode plate, and the lithium ions can be stored in pores of the carbon framework to maintain a stable volume of the negative electrode plate. In addition, the carbon framework can disperse a current and reduce a current density at a local region, thereby improving a deposition morphology, reducing lithium dendrites, increasing a lithium deposition density, and in turn, improving the performance of lithium-ion battery.

However, a binding energy of the carbon material that binds with lithium is as high as approximately -1 eV. Therefore, in the existing negative electrode plate that employs a carbon framework, the deposition position of the lithium metal is uncontrollable, thereby resulting in uneven deposition of the lithium metal. Further, due to the uneven deposition of the lithium metal, the volume of the negative electrode plate changes greatly during cycles, so that the energy density of the lithium-ion battery manufactured based on the existing carbon-framework negative electrode plate remains to be improved.

### SUMMARY

An objective of this application is to provide a negative electrode plate, a method for preparing same, a battery containing same, and an electronic device to improve deposition uniformity of lithium metal. Specific technical solutions are as follows:

A first aspect of this application provides a negative electrode plate, including a current collector and an active layer. The active layer includes a porous carbon framework and includes silicon nanoparticles and lithium metal that are located in the porous carbon framework.

In an implementation solution of this application, a volume sum of the porous carbon framework and the silicon nanoparticles accounts for 10% to 60% of a total volume of the active layer.

In an implementation solution of this application, a ratio of a total volume of the porous carbon framework to a total volume of the silicon nanoparticles is 5: 1 to 100: 1.

In an implementation solution of this application, a content of the lithium metal in the active layer is 0.001 to 3 mg/cm².

In an implementation solution of this application, a thickness of the active layer is 1 to 100 µm.

In an implementation solution of this application, a strength of the porous carbon framework is not lower than 200 GPa.

In an embodiment of this application, a porosity of the porous carbon framework is 40% to 90%.

In an implementation solution of this application, the current collector is made of a material including at least one of copper, nickel, titanium, molybdenum, iron, zinc, stainless steel, or an alloy thereof, or carbon, or graphene.

A second aspect of this application provides a method for preparing a negative electrode plate described in the first aspect above, including:
putting a porous carbon framework sheet into a CVD device, and passing a silane-containing gas into the device to deposit nano-silicon particles to obtain an electrodeposited porous carbon framework sheet;
leaving molten lithium metal to contact the electrodeposited porous carbon framework sheet in a protective gas atmosphere, so that the lithium metal fills pores of the electrodeposited porous carbon framework sheet to make an active layer; and
putting the active layer on a current collector, and performing hot calendering to bind the active layer and the current collector together to make a negative electrode plate.

In an implementation solution of this application, a deposition time of nano-silicon particles is controlled to be 5 to 120 min.

A third aspect of this application provides a lithium-ion battery, including:
a positive electrode plate;
a negative electrode plate;
a separator, located between the positive electrode plate and the negative electrode plate; and
an electrolytic solution.

The negative electrode plate is the negative electrode plate described in the first aspect above.

A third aspect of this application provides an electronic device. The electronic device includes the lithium-ion battery described in the third aspect above.

This application provides a negative electrode plate. The negative electrode plate includes a current collector and an active layer. The active layer includes: a porous carbon framework, silicon nanoparticles, and lithium metal. The silicon nanoparticles and lithium metal are located in the porous carbon framework. During cycles, the nano-silicon can spontaneously alloy with lithium metal from a positive electrode, thereby providing sites required for lithium deposition, and effectively regulating the lithium deposition positions. In this way, the lithium is preferentially deposited in the pores during cycles, and the lithium metal deposition is more uniform, thereby reducing the volume change of the negative electrode plate during cycles and suppressing growth of lithium dendrites.

### BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below merely illustrate some embodiments of this application, and a person of ordinary skill in the art may derive other technical solutions from such drawings without making any creative effort.
FIG. 1 is a schematic structural diagram of a negative electrode framework in the related art;
FIG. 2 is a schematic structural diagram of a negative electrode plate according to an implementation solution of this application;
FIG. 3 is a schematic structural diagram of a negative electrode plate according to another implementation solution of this application; and
FIG. 4 is a schematic structural diagram of a negative electrode plate according to still another implementation solution of this application.

### DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other technical solutions derived by a person of ordinary skill in the art based on the embodiments of this application without making any creative effort fall within the protection scope of this application.

In an existing lithium-ion battery, a negative electrode plate is made of a material such as graphite. During charging, lithium ions are intercalated into and exist in a graphite layer structure. The graphite layer is similar to a framework structure, and provides a storage space for lithium. However, no such framework structure exists in a lithium-ion battery containing a pure lithium metal electrode. Therefore, in a charge-and-discharge process, the volume of the negative electrode plate changes violently. Generally, the thickness of the negative electrode plate changes in a range of 8 to 200 µm, resulting in a decline of the cycle performance of the battery. In addition, during charging, lithium is deposited on a surface of a current collector of the negative electrode plate. Due to non-uniformity of a current density and a concentration of lithium ions in the electrolytic solution, lithium ions are deposited on some sites at an unusually high speed during deposition. Such lithium ions grow out of the lithium metal body in a form similar to synapses, and keep growing or even branch off to eventually form sharp lithium dendrites. The existence of the lithium dendrites decreases the deposition density greatly, thereby decreasing the energy density of the battery greatly. For example, in some lithium-ion batteries, an actual deposition density of the lithium metal is approximately 0.2 g/cm³, much less than 0.534 g/cm³ that is a true density of the lithium metal. Due to loose deposition of the lithium metal, the energy density of the battery decreases by at least 100 Wh/L. In addition, the lithium dendrites are prone to pierce the separator to cause a short circuit and lead to battery failure, thereby impairing battery safety.

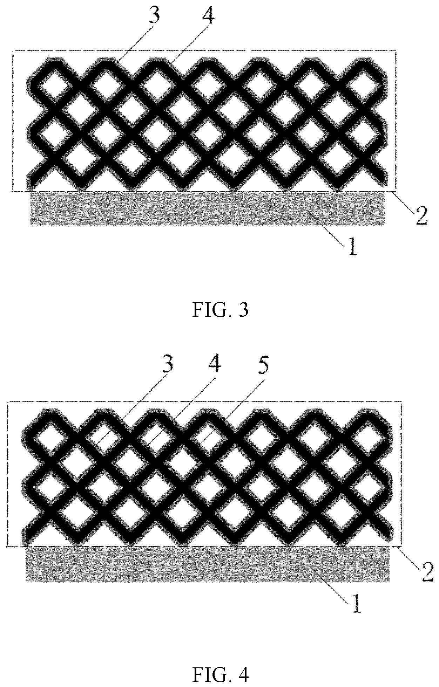

In view of this, this application provides a negative electrode plate. Referring to FIG. 2 and FIG. 3, FIG. 2 is a top view of a negative electrode plate according to an implementation solution of this application, and FIG. 3 is a sectional view of a negative electrode plate according to an implementation solution of this application. The negative electrode plate includes a current collector 1 and an active layer 2. The active layer 2 includes a porous carbon framework 3 and includes silicon nanoparticles 4 and lithium metal 5 that are located in the porous carbon framework 3. Understandably, the silicon nanoparticles 4 and the lithium metal 5 may be discretely distributed in the porous carbon framework 3, or may be continuously distributed in the porous carbon framework 3. This application does not exclude the possibility that a small part of silicon nanoparticles 4 and lithium metal 5 are located on the surface of the porous carbon framework.

In an implementation solution of this application, the active layer 2 may be formed of a porous carbon framework 3, silicon nanoparticles 4, and lithium metal 5. The porous carbon framework 3 may be a film structure with a large number of pores. The pores in the porous carbon framework 3 may be micropores, or holes in other shapes. In addition, the porous carbon framework 3 possesses sufficient strength. For example, the strength of the porous carbon framework 3 is not lower than 200 GPa, so as to maintain a stable morphology and internal space. During charging, the porous carbon framework 3 can provide a stable space, so that the lithium metal is disposed in a large number of pores of the porous carbon framework 3. During discharging, when the lithium on the negative electrode keeps decreasing, the porous carbon framework 3 can form a stable structure and internal space to prevent the negative electrode from shrinking violently. On the other hand, the porous carbon framework 3 is a carbon-based material, and is high ionic and electronic conductivity, and therefore, can provide conductive channel. Further, the porous carbon framework 3 possesses a high specific surface area, and therefore, can effectively disperse the current in charge-and-discharge processes, reduce the current density, and form a more uniform electric field, thereby improving the uniformity of lithium deposition and suppressing the growth of lithium dendrites.

However, through research, the inventor finds that the effect of the porous carbon framework 3 can be maximized only if the lithium metal deposition positions are effectively controlled. If the lithium metal is deposited on the surface of the negative electrode plate, the volume of the negative electrode plate still changes violently during cycles, so that the effect of the porous carbon framework 3 can hardly be exerted.

Therefore, the active layer according to this application further includes silicon nanoparticles 4. The silicon nanoparticles are located in the porous carbon framework 3. The silicon nanoparticles 4 can spontaneously alloy with the lithium metal at an alloying potential of up to approximately 0.2 V, so as to provide sites required for lithium metal deposition, and in turn, effectively regulate the lithium metal deposition positions. In this way, the lithium metal is preferentially deposited in the pores of the porous carbon framework 3 rather than on the surface of the negative electrode plate during cycles.

The active layer according to this application may further include pre-supplement lithium metal 5. Understandably, the lithium metal 5 is a negative active material. The lithium metal possesses a higher specific capacity than materials such as carbon and silicon. The specific capacity of the lithium metal is 3860 mAh/g, the specific capacity of silicon is 3600 mAh/g, but the specific capacity of carbon is merely 372 mAh/g. Therefore, the battery containing such a negative electrode plate possesses a higher energy density. Understandably, the lithium metal 5 may be a supplement added beforehand during preparation of the negative electrode plate, or may be all transferred from the positive electrode, or, may derive from both the pre-supplement and the transfer from the positive electrode.

In an implementation solution of this application, the silicon nanoparticles 4 may be attached into the porous carbon framework 3, and the lithium metal 5 may fill in the porous carbon framework 3.

In an implementation solution of this application, a volume sum of the porous carbon framework and the silicon nanoparticles accounts for 10% to 60% of a total volume of the active layer. By controlling the sum of the volume percent of the porous carbon framework and the silicon nanoparticles to fall within the foregoing range, the lithium-ion battery manufactured by using the negative electrode plate is rechargeable for more cycles at a lower volume expansion rate.

In an implementation solution of this application, the ratio of the total volume of the porous carbon framework to the total volume of the silicon nanoparticles may be 5: 1 to 100: 1. That is, in the active layer 2, the ratio of the total volume of the porous carbon framework to the total volume of the silicon nanoparticles is 5: 1 to 100: 1. When a volume percent of the silicon nanoparticles in the active layer is low, the guiding effect of the silicon nanoparticles on the lithium metal deposition is insufficient, and consequently, a part of the lithium metal is deposited on the surface of the negative electrode plate, and leads to a relatively high degree of volume expansion of the negative electrode plate. When the volume percent of the silicon nanoparticles in the active layer is moderate, the lithium metal is deposited inside the negative electrode plate, and the degree of volume expansion of the negative electrode plate is relatively low. However, when excessive silicon nanoparticles exist in the active layer, because the silicon nanoparticles themselves do not participate in the reaction during cycles, the excess silicon nanoparticles are adverse to the lithium metal deposition instead. By controlling the volume percent of the silicon nanoparticles in the active layer to fall within the foregoing range, the lithium-ion battery manufactured by using the negative electrode plate is rechargeable for more cycles at a lower volume expansion rate.

In an implementation solution of this application, the content of the lithium metal in the active layer is 0.001 to 3 mg/cm². If the content of pre-supplement lithium is deficient, little effect can be produced on the improvement of the cycle performance of the battery. If the content of pre-supplement lithium is excessive, safety of the battery may be impaired.

In an implementation solution of this application, a thickness of the active layer is 1 to 100 µm.

In an embodiment of this application, a porosity of the porous carbon framework is 40% to 90%.

The material of the current collector according to this application is not particularly limited, and may be a material well known to a person skilled in the art. For example, the material of the current collector includes or is not limited to at least one of copper, nickel, titanium, molybdenum, iron, zinc, stainless steel, or an alloy thereof. Alternatively, the material of the current collector is a conductive inorganic material such as carbon or graphene. One of such materials may be used alone, or two or more thereof may be used in combination.

With the negative electrode plate according to this application, the nano-silicon can spontaneously alloy with lithium metal from a positive electrode during cycles, thereby providing sites required for lithium deposition, and effectively regulating the lithium deposition positions. In this way, the lithium is preferentially deposited in the pores during cycles, and the lithium metal deposition is more uniform, thereby reducing the volume change of the negative electrode plate during cycles and suppressing growth of lithium dendrites.

This application further provides a method for preparing a negative electrode plate, including the following steps:
compounding a porous carbon framework and silicon nanoparticles:
   putting a porous carbon framework sheet into a CVD device, and passing a silane-containing gas into the device to deposit nano-silicon particles to obtain an electrodeposited porous carbon framework sheet. In this step, the porous carbon framework sheet may be prepared beforehand by carbonizing a glucose solution, and the silane-containing gas may be monosilane or disilane;
   pre-supplementing lithium:
leaving molten lithium metal to contact the electrodeposited porous carbon framework sheet in a protective gas atmosphere, so that the lithium metal fills pores of the electrodeposited porous carbon framework sheet to make an active layer. In this step, the protective gas may be an argon atmosphere, in which the water content is lower than 1 ppm, and the oxygen content is lower than 1 ppm. When the molten lithium metal is in contact with the electrodeposited porous carbon framework sheet, the lithium spontaneously fills pores of the electrodeposited porous carbon framework sheet; and
preparing a negative electrode plate:
   putting the active layer on a current collector, and performing hot calendering to bind the active layer and the current collector together to make a negative electrode plate. After the negative electrode plate is prepared, the negative electrode plate may be die-cut into a 40 × 60 mm size, ready for being assembled into a stacked-type battery.

In this application, by depositing silicon nanoparticles on the porous carbon framework sheet, the lithium metal deposition of the negative electrode plate is more uniform during cycles, thereby reducing the volume change of the negative electrode plate during cycles. In addition, the battery containing the negative electrode plate according to this application achieves higher cycle performance by virtue of the pre-supplement lithium metal.

In an implementation solution of this application, a lithium-ion battery is further provided, including: a positive electrode plate, a negative electrode plate, a separator, and an electrolytic solution. The separator is located between the positive electrode plate and the negative electrode plate. The negative electrode plate is the negative electrode plate described in any one of the embodiments above.

In the lithium-ion battery according to this application, the nano-silicon in the negative electrode plate can spontaneously alloy with lithium metal from a positive electrode during cycles, thereby providing sites required for lithium deposition, and effectively regulating the lithium deposition positions. In this way, the lithium is preferentially deposited in the pores during cycles, and the lithium metal deposition is more uniform, thereby reducing the volume change of the negative electrode plate during cycles, suppressing growth of lithium dendrites, and improving safety of the lithium-ion battery.

In an implementation solution of this application, an electronic device is further provided, including the lithium-ion battery described in the embodiments above. In the lithium-ion battery used in the electronic device, the lithium metal deposition is more uniform, thereby reducing the volume change of the negative electrode plate during cycles, suppressing growth of lithium dendrites, and improving safety of the electronic device.

The positive electrode plate in this application is not particularly limited, and may be any positive electrode plate known in the art. For example, the positive electrode plate may be a positive electrode plate containing lithium cobalt oxide, a positive electrode plate containing lithium manganese oxide, a positive electrode plate containing lithium iron phosphate, or a positive electrode plate containing lithium nickel cobalt manganese oxide or lithium nickel cobalt aluminum oxide.

The separator in this application is not particularly limited, and may be any separator well known in the art, such as polyethylene (PE) separator and polypropylene (PP) separator.

The electrolytic solution in this application is not particularly limited, and may be any electrolytic solution well known in the art, for example, an electrolytic solution prepared by mixing lithium bis(fluorosulfonyl)imide (LiFSI) and lithium nitrate (LiNO₃) in an organic solvent of dioxolane (DOL) and dimethyl ether (DME), or an electrolytic solution prepared by mixing LiPF₆ in an organic solvent of dimethyl carbonate (DMC) and ethyl methyl carbonate (EMC).

The implementations of this application are described below in more detail with reference to embodiments and comparative embodiments. Various tests and evaluations are performed in accordance with the following methods. In addition, unless otherwise specified, "fraction" and "%" mean a percent by weight.

### Embodiment 1

### <Preparing an active material>

### a) Preparing a porous hard carbon framework

Putting glucose powder in a mold, applying a pressure of 10 tons to press the powder into a glucose sheet, and then carbonizing the glucose sheet by heating to 800 °C and keeping the temperature for 10 hours under protection of an argon atmosphere, so as to finally obtain a hard carbon framework 50 µm in thickness, that is, a porous carbon framework sheet with a porosity of 70%.

### b) Compounding the porous carbon framework and nano-silicon

Putting the porous carbon framework sheet into a CVD (chemical vapor deposition, chemical vapor deposition) device, passing a silane-containing gas into the device at a flow rate of 100 sccm/min, where the pressure of the CVD device is 30 torr. Depositing at 500 °C for 30 minutes to obtain an electrodeposited porous carbon framework sheet in which the average particle diameter of silicon nanoparticles is 20 nm.

### c) Pre-supplement lithium

Putting metallic lithium in a stainless steel crucible in a dry argon atmosphere, and heating to 300 °C so that the solid-state metallic lithium is melted into a liquid state. Leaving the electrodeposited porous carbon framework sheet to contact the molten lithium, so that the lithium metal spontaneously fills in the pores of the electrodeposited porous carbon framework sheet to make an active layer. In the argon atmosphere, the water content is lower than 1 ppm, the oxygen content is lower than 1 ppm, and the dosage of lithium in the active layer is 0.5 mg/cm².

### <Preparing a negative electrode plate>

Putting the obtained active layer on a 15-µm-thick nickel current collector in a dry argon atmosphere, binding the active layer to the nickel current collector by hot calendering at a temperature of 300 °C under a hot-calendering pressure of 100 kg, so as to obtain a negative electrode plate; and then die-cutting the negative electrode plate into a 40×60 mm size ready for use.

### <Preparing a positive electrode plate>

Mixing a positive active material lithium iron phosphate (LiFePO₄), conductive carbon black, and polyvinylidene difluoride (PVDF) at a weight ratio of 97.5: 1.0: 1.5 in an N-methyl-pyrrolidone (NMP) solvent, and stirring evenly to form a slurry with a solid content of 75%. Coating a 15-µm-thick current collector aluminum foil with the slurry evenly, and drying at 90 °C to obtain a positive electrode plate, where the coating amount of a positive active material on the current collector aluminum foil is 1 mg/cm². Upon completion of coating, cutting the positive electrode plate into a 38 mm × 58 mm size ready for use.

### <Preparing an electrolytic solution>

Mixing organic solvents DOL and DME at a volume ratio of 1: 1 between DOL and DME in a dry argon atmosphere to obtain a mixed solvent. Adding lithium salt LiFSI and LiNO₃ into the mixed solvent, and dissolving the lithium salt and mixing the solution evenly to make an electrolytic solution. The dosage of LiFSI in the mixed solvent is 1 mol/L, and the dosage of LiNO₃ in the mixed solvent is 1 wt%.

### <Preparing a lithium-ion battery>

Using a 15-µm-thick polyethylene (PE) film as a separator, and placing a positive electrode plate on two sides of the negative electrode plate separately. Placing a layer of separator between the positive electrode plate and the negative electrode plate to form a stacked plate, and then fixing four corners of the entire stacked plate structure by using adhesive tape. Putting the plates into an aluminum plastic film, and performing top-and-side sealing, electrolyte injection, and sealing to obtain a stacked-type lithium metal battery.

### Embodiment 2

Identical to Embodiment 1 except that the deposition duration of the porous carbon framework sheet in the CVD device is 5 minutes.

### Embodiment 3

Identical to Embodiment 1 except that the deposition duration of the porous carbon framework sheet in the CVD device is 120 minutes.

### Embodiment 4

Identical to Embodiment 1 except that the dosage of lithium in the active layer is controlled to be 0.2 mg/cm² by reducing the dosage of the pre-supplement lithium during preparation of the active layer.

### Embodiment 5

Identical to Embodiment 1 except that the dosage of lithium in the active layer is controlled to be 1 mg/cm² by increasing the dosage of the pre-supplement lithium during preparation of the active layer.

### Embodiment 6

Identical to Embodiment 1 except that the dosage of lithium in the active layer is controlled to be 3 mg/cm² by increasing the dosage of the pre-supplement lithium during preparation of the active layer.

### Embodiment 7

Identical to Embodiment 1 except that the current collector of the negative electrode plate is made of a titanium material.

### Embodiment 8

Identical to Embodiment 1 except that the current collector of the negative electrode plate is made of a copper material.

### Embodiment 9

The lithium-ion battery is prepared by the same method as in Embodiment 1, except that the charge rate is 0.2 C in the performance test of the prepared lithium-ion battery.

### Embodiment 10

The lithium-ion battery is prepared by the same method as in Embodiment 1, except that the charge rate is 0.4 C in the performance test of the prepared lithium-ion battery.

### Embodiment 11

Identical to Embodiment 1 except that the average particle diameter of the silicon nanoparticles in the electrodeposited porous carbon framework sheet is controlled to be 5 nm by lowering the deposition temperature or by other means during preparation of the electrodeposited porous carbon framework sheet.

### Embodiment 12

Identical to Embodiment 1 except that the average particle diameter of the silicon nanoparticles in the electrodeposited porous carbon framework sheet is controlled to be 50 nm by increasing the deposition temperature during preparation of the electrodeposited porous carbon framework sheet.

### Embodiment 13

Identical to Embodiment 1 except that the porosity of a porous hard carbon framework is controlled to be 40% by lowering the carbonization temperature during preparation of the porous hard carbon framework.

### Embodiment 14

Identical to Embodiment 1 except that the porosity of a porous hard carbon framework is controlled to be 90% by increasing the carbonization temperature or by other means during preparation of the porous hard carbon framework.

### Embodiment 15

Identical to Embodiment 1 except that the thickness of the porous carbon framework sheet is reduced to 20 µm by reducing the dosage of glucose during preparation of the porous hard carbon framework.

### Embodiment 16

Identical to Embodiment 1 except that the thickness of the porous carbon framework sheet is increased to 75 µm by increasing the dosage of glucose during preparation of the porous hard carbon framework.

### Embodiment 17

Identical to Embodiment 1 except that the thickness of the porous carbon framework sheet is increased to 100 µm by increasing the dosage of glucose during preparation of the porous hard carbon framework.

### Comparative Embodiment 1

### <Preparing a negative electrode plate with a lithium-coated copper foil>

Punching a commercially available lithium-coated copper foil into a 40 × 60 mm size ready for being assembled into a stacked-type battery. The thickness of the lithium-coated copper foil is 30 µm.

### Comparative Embodiment 2

### <Preparing a negative electrode plate containing a porous carbon framework and pre-supplement lithium and containing no silicon nanoparticles>

### a) Preparing a porous carbon framework

Preparing a porous carbon framework by the same method as in Embodiment 1.

### b) Pre-supplement lithium

Putting metallic lithium in a stainless steel crucible in a dry argon atmosphere, and heating to 300 °C so that the solid-state metallic lithium is melted into a liquid state. Leaving the electrodeposited porous carbon framework sheet to contact the molten lithium.

Subsequently, preparing a negative electrode plate by performing the same negative electrode plate preparation method as in Embodiment 1.

### Comparative Embodiment 3

### <Preparing a negative electrode plate containing no carbon framework but containing silicon particles (non-CVD method)>

Mixing silicon powder particles of an average particle diameter of 80 nm with lithium metal at a volume ratio of 1: 10 in a dry argon atmosphere, and then binding the silicon powder particles and the lithium metal together by hot calendering at a temperature of 150 °C under a pressure of 100 kg to obtain a negative electrode plate that is 30 µm thick on average. Subsequently, die-cutting the negative electrode plate into a 40 × 60 mm size ready for being assembled into a stacked-type battery.

### Comparative Embodiment 4

### <Preparing a negative electrode plate containing a porous carbon framework and silicon particles (CVD method) but containing no pre-supplement lithium>

The process of preparing a porous carbon framework is identical to that in Embodiment 1.

The process of compounding a porous carbon framework and nano-silicon is the same as that in Embodiment 1, by which an electrodeposited porous carbon framework sheet is obtained. The porous carbon framework sheet is not subjected to pre-supplementing of lithium, and a negative electrode plate is directly prepared by performing the negative electrode plate preparation method in Embodiment 1.

### Comparative Embodiment 5

### <Preparing a negative electrode plate containing merely silicon particles (non-CVD method)>

Mixing silicon nanoparticles, polyacrylic acid, and conductive carbon in water at a mass ratio of 80: 10: 10, and stirring evenly to obtain a mixed solution. Coating a nickel current collector with the mixed solution, and drying the current collector at 180 °C to obtain a negative electrode plate. The dosage of silicon in the negative electrode plate is 1.1 mg/cm². Subsequently, die-cutting the negative electrode plate into a 40 × 60 mm size, ready for being assembled into a stacked-type battery.

### Comparative Embodiment 6

### <Preparing a negative electrode plate containing merely a porous carbon framework>

Preparing a porous hard carbon framework by the same method as in Embodiment 1, and using the porous hard carbon framework as a negative electrode plate.

### Comparative Embodiment 7

### <Preparing a negative electrode plate containing merely a current collector>

Using a nickel current collector directly as a negative electrode plate.

### Comparative Embodiment 8

### <Preparing a negative electrode plate containing merely a current collector and pre-supplement lithium>

Putting metallic lithium in a stainless steel crucible in a dry argon atmosphere, and heating to 300 °C so that the solid-state metallic lithium is melted into a liquid state. Leaving the nickel current collector to contact the molten lithium, with a small amount of lithium attached to the surface of the nickel current collector.

### Comparative Embodiment 9

### <Preparing a negative electrode plate containing merely a current collector and pre-supplement lithium>

The negative electrode plate is prepared by the same method as in Comparative Embodiment 8, but a difference from Comparative Embodiment 8 is that the lithium-ion battery prepared from the negative electrode plate is charged at a rate of 0.4 C.

After the negative electrode plates in Embodiments 2 to 14 and Comparative Embodiments 1 to 9 are prepared, the lithium ion batteries are prepared by using the same method as the lithium-ion battery preparation method in Embodiment 1.

### <Performance test>

The lithium-ion batteries prepared in Embodiments 1 to 8, Embodiments 11 to 14, and Comparative Embodiments 1 to 8 are tested by using the following methods:

Performing chemical formation on the lithium-ion battery in each embodiment for one cycle at both a charge rate and a discharge rate of 0.1 C under a 60 °C condition, and then performing charge-and-discharge cycles at a normal temperature. In the constant-current charging stage, the current is 1 C, and the cut-off voltage is 3.8 V. In the constant-voltage charging stage, the cut-off current is 0.05 C. In the constant-current discharge step, the discharge rate is 1 C, and the cut-off voltage is 2.7 V.

Charging the prepared lithium-ion battery in Embodiment 9 at a charge rate of 0.2 C.

Charging the prepared lithium-ion battery in Embodiment 10 at a charge rate of 0.2 C.

Charging the prepared lithium-ion battery in Comparative Embodiment 9 at a charge rate of 0.4 C.

The volume expansion rate in each embodiment and comparative embodiment is tested and calculated by using the following methods:

Cutting the positive electrode plate and the negative electrode plate in each embodiment and comparative embodiment into a 10 mm × 5 mm size separately. Put the electrode plate into an ion beam cross-section polisher to polish the cross section of each electrode plate. Putting the resulting electrode plate into a scanning electron microscope (SEM). Observing the cross section of the polished electrode plate at a suitable magnification, and measuring the corresponding thickness. Subsequently, adding up the thicknesses of the positive electrode plate, the negative electrode plate, and the separator to obtain the thickness of a battery cell exclusive of the packaging thickness. Measuring the thicknesses of the battery cell at 0% SOC and 100% SOC respectively, denoted by t(0%) and t(100%) respectively. Calculating the volume expansion rate according to the following formula: volume expansion rate = (t(100%) - t(0%))/t(0%).

Table 1 shows the test parameters and corresponding test results in Embodiments 1 to 14 and Comparative Embodiments 1 to 9.

**Table 1 Test parameters and test results in embodiments and comparative embodiments**

| | Volume expansion rate (after SOC drops from 100% to 0%) | Number of cycles (with capacity retention rate of 80%) |
|---|---|---|
| Embodiment 1 | 5% | 80 |
| Embodiment 2 | 20% | 60 |
| Embodiment 3 | 5% | 80 |
| Embodiment 4 | 5% | 40 |
| Embodiment 5 | 6% | 150 |
| Embodiment 6 | 30% | 120 |
| Embodiment 7 | 5% | 85 |
| Embodiment 8 | 5% | 75 |
| Embodiment 9 | 4% | 180 |
| Embodiment 10 | 7% | 60 |
| Embodiment 11 | 6% | 80 |
| Embodiment 12 | 5% | 75 |
| Embodiment 13 | 10% | 50 |
| Embodiment 14 | 6% | 70 |
| Embodiment 15 | 15% | 50 |
| Embodiment 16 | 4% | 75 |
| Embodiment 17 | 3% | 75 |
| Comparative Embodiment 1 | 40% | 20 |
| Comparative Embodiment 2 | 25% | 30 |
| Comparative Embodiment 3 | 40% | 20 |
| Comparative Embodiment 4 | 2% | 3 |
| Comparative Embodiment 5 | 40% | 5 |
| Comparative Embodiment 6 | 2% | 3 |
| Comparative Embodiment 7 | 50% | 3 |
| Comparative Embodiment 8 | 40% | 20 |
| Comparative Embodiment 9 | 50% | 15 |

As shown in Table 1, in Embodiments 1 to 3, although the deposition amount of silicon nanoparticles varies, the volume expansion rate is significantly lower than that in Comparative Embodiments 1 to 3, 5, and 7 to 9, and the number of cycles is significantly higher than that in Comparative Embodiments 1 to 9.

In Embodiments 4 to 6, although the dosage of the pre-supplement lithium varies, the number of cycles is significantly higher than that in Comparative Embodiments 1 to 9. Especially in Embodiment 5, the volume expansion rate is significantly reduced, and the number of cycles is significantly increased.

In Embodiments 7 and 8, although the current collector material varies, the volume expansion rate is significantly lower and the number of cycles is significantly higher than that in Comparative Embodiments 1 to 9.

In Embodiments 9 and 10, although different charge rates are applied in the performance test performed on the prepared lithium-ion batteries, the volume expansion rate is significantly lower than and the number of cycles is significantly higher than that in Comparative Embodiments 1 to 9.

In Embodiments 11 and 12, although the average particle diameter of the silicon nanoparticles varies, the volume expansion rate is significantly lower and the number of cycles is significantly higher than that in Comparative Embodiments 1 to 9.

In Embodiments 13 and 14, although the porosity of the porous hard carbon framework varies, the volume expansion rate is significantly lower and the number of cycles is significantly higher than that in Comparative Embodiments 1 to 9.

In Embodiments 15 to 17, when the thickness of the porous carbon sheet is relatively low relative to the dosage of the positive active material (as in Embodiment 15), the pores inside the electrode plate are not enough to carry all the pre-supplement lithium and electrodeposited lithium. In this case, a part of the lithium is deposited on the surface of the electrode plate, resulting in an increase in the volume change and deterioration of the cycle performance. When the thickness is increased to 75 µm and 100 µm, due to the increase in the inherent thickness, the volume expansion is slightly alleviated at the expense of the energy density. On the other hand, the number of cycles decreases to some extent due to increase in the specific surface area. Therefore, the thickness needs to be set optimally by comprehensively considering the energy density, volume expansion, number of cycles, and dosage of the positive active material.

In Comparative Embodiment 1, the battery is prepared by using merely a lithium-coated copper foil negative electrode plate, the volume expansion rate of the battery is significantly higher and the number of cycles is significantly lower than that of the battery prepared in Embodiments 1 to 17.

In Comparative Embodiment 2, when the negative electrode plate contains no silicon nanoparticles, the volume expansion rate is significantly higher and the number of cycles is significantly lower than that of the battery prepared in Embodiments 1 to 17.

In Comparative Embodiment 3, when the negative electrode plate contains no carbon framework despite the silicon nanoparticles contained, the volume expansion rate is significantly higher and the number of cycles is significantly lower than that of the battery prepared in Embodiments 1 to 17.

In Comparative Embodiment 4, when the negative electrode plate contains silicon particles other than the silicon nanoparticles prepared by the SVD method and contains no pre-supplement lithium, the volume expansion rate scarcely changes but the number of cycles is significantly lower than that in Embodiments 1 to 17.

In Comparative Embodiment 5, when the negative electrode plate contains merely silicon particles (not prepared by the CVD method) but contains no carbon framework or pre-supplement lithium, the volume expansion rate is significantly higher and the number of cycles is significantly lower than that of the battery prepared in Embodiments 1 to 17.

In Comparative Embodiment 6, when the negative electrode plate contains merely the porous carbon framework but contains no pre-supplementing lithium, the volume expansion rate scarcely changes but the number of cycles is significantly lower than that of the battery prepared in Embodiments 1 to 17.

In Comparative Embodiment 7, when the negative electrode plate contains merely the current collector but contains no carbon framework or pre-supplement lithium, the volume expansion rate is significantly higher and the number of cycles is significantly lower than that of the battery prepared in Embodiments 1 to 17.

In Comparative Embodiment 8, when the negative electrode plate contains merely the current collector and pre-supplement lithium, the volume expansion rate is significantly higher and the number of cycles is significantly lower than that of the battery prepared in Embodiments 1 to 17.

In Comparative Embodiment 9, when the negative electrode plate contains merely the current collector and pre-supplement lithium and the battery is charged at a charge rate of 0.4 C, the volume expansion rate is significantly higher and the number of cycles is significantly lower than that of the battery prepared in Embodiments 1 to 17.

What is described above is merely preferred embodiments of this application, but is not intended to limit this application. Any modifications, equivalent substitutions, and improvements made within the spirit and principles of this application still fall within the protection scope of this application.

## Claims

1. A negative electrode plate, comprising a current collector and an active layer, wherein the active layer comprises a porous carbon framework and comprises silicon nanoparticles and lithium metal that are located in the porous carbon framework.

2. The negative electrode plate according to claim 1, wherein a volume sum of the porous carbon framework and the silicon nanoparticles accounts for 10% to 60% of a total volume of the active layer.

3. The negative electrode plate according to claim 1 or 2, wherein a ratio of a total volume of the porous carbon framework to a total volume of the silicon nanoparticles is 5: 1 to 100: 1.

4. The negative electrode plate according to claim 1, wherein a content of the lithium metal in the active layer is 0.001 to 3 mg/cm².

5. The negative electrode plate according to claim 1, wherein a thickness of the active layer is 1 to 100 µm.

6. The negative electrode plate according to claim 1, wherein a strength of the porous carbon framework is not lower than 200 GPa.

7. The negative electrode plate according to claim 1, wherein a porosity of the porous carbon framework is 40% to 90%.

8. The negative electrode plate according to claim 1, wherein the current collector is made of a material comprising at least one of copper, nickel, titanium, molybdenum, iron, zinc, stainless steel, carbon, or graphene.

9. A lithium-ion battery, comprising: a positive electrode plate;
a negative electrode plate;
a separator, located between the positive electrode plate and the negative electrode plate; and
an electrolytic solution,
wherein, the negative electrode plate is the negative electrode plate according to any one of claims 1 to 8.

10. An electronic device, wherein the electronic device comprises the lithium-ion battery according to claim 9.
